# EUROPÄISCHE PATENTSCHRIFT

(11) **EP 3 129 930 B1**
(45) Veröffentlichungstag und Bekanntmachung des Hinweises auf die Patenterteilung: **24.10.2018**
(21) Anmeldenummer: 15713755.5
(22) Anmeldetag: 01.04.2015
(51) Int. Cl.: B60L 11/18, B64D 1/22, B64D 45/08, A47G 29/14, B64C 39/02, B64F 1/04, B65G 67/00, G06Q 10/08, G06Q 50/28, G07F 17/12

(54) **ANORDNUNG ZUM ÜBERBRINGEN EINER SENDUNG**
ASSEMBLY FOR DELIVERING A SHIPMENT
SYSTÈME DE REMISE D'UN ENVOI

(30) Priorität: 11.04.2014 DE 102014105196; 17.04.2014 DE 102014105583
(43) Veröffentlichungstag der Anmeldung: 15.02.2017
(73) Patentinhaber: Deutsche Post AG, 53113 Bonn (DE)
(72) Erfinder: OGILVIE, Thomas, 53179 Bonn (DE); PRUSKI, Matthäus, 53844 Troisdorf (DE); BENZ, Ramin, 53229 Bonn (DE)
(74) Vertreter: Michalski Hüttermann & Partner Patentanwälte mbB
(86) Internationale Anmeldenummer: PCT/EP2015/057149
(87) Internationale Veröffentlichungsnummer: WO 2015/155086

(56) Entgegenhaltungen:
- WO-A2-2007/065649
- WO-A2-2008/085547
- WO-A2-2014/080389
- US-A1- 2011 084 162
- US-A1- 2014 032 034
- KOJI A O SUZUKI ET AL: "Automatic Battery Replacement System for UAVs: Analysis and Design", JOURNAL OF INTELLIGENT AND ROBOTIC SYSTEMS ; THEORY AND APPLICATIONS - (INCORPORATING MECHATRONIC SYSTEMS ENGINEERING), KLUWER ACADEMIC PUBLISHERS, DO, Bd. 65, Nr. 1 - 4, 9. September 2011 (2011-09-09), Seiten 563-586, XP019989902, ISSN: 1573-0409, DOI: 10.1007/S10846-011-9616-Y
- Evan Ackerman ET AL: "Amazon Promises Package Delivery By Drone: Is It for Real? -IEEE Spectrumdrones/amazon-prime-air-package-dr one-delivery[ Amazon Promises Package Delivery By Drone: Is It for Real? Subscribe to RSS Feed Editor Erico Guizzo New York City Senior Writer", , 2 December 2013 (2013-12-02), XP055412398, Retrieved from the Internet: URL:http://spectrum.ieee.org/automaton/rob otics/drones/amazon-prime-air-package-dron e-delivery [retrieved on 2017-10-04]
- Tim Mohr: "ARES ETHOS QX 130 QUADCOPTER on Facebook on YouTube on Twitter on Google+ on Instagram", , 1 November 2013 (2013-11-01), XP055412509, Retrieved from the Internet: URL:http://www.bigsquidrc.com/ares-ethos-q x-130-quadcopter/ [retrieved on 2017-10-04]

## Beschreibung

Die Erfindung betrifft eine Anordnung mit einer unbemannten Transporteinrichtung zum Überbringen einer Sendung und einer Übergabeeinrichtung. Zudem betrifft die Erfindung ein Verfahren zum Übergeben der Sendung zwischen der unbemannten Transporteinrichtung und einem Aufnahmebehälter.

Infolge steigender Güterverkehre, wie Stück- und Sammelgutfahrten über LKW Transporte oder Containertransporte durch See- oder Luftfracht und den Transport von Paketen bei der Nutzung von beispielsweise E-Commerce sowie Online-Versandhandelsangeboten, hat sich die Anzahl von Transportgütern und dabei insbesondere von Paketsendungen signifikant erhöht. Während eine Bestellung unabhängig von herkömmlichen Ladenöffnungszeiten getätigt werden kann, erfolgt die Auslieferung der Bestellung als Sendung an den Besteller jedoch immer noch mittels klassischer Zustellverfahren, so beispielsweise durch Briefträger oder, im Falle von Paketsendungen, durch motorisierte Zustellfahrzeuge. Ein Auslieferungsversuch der Sendung an den Besteller erfolgt in der Regel nur einmal pro Tag.

Ist der Besteller zum Zeitpunkt des Auslieferungsversuches jedoch nicht anzutreffen, so beispielsweise, weil er als Berufstätiger seiner Arbeit nachgeht, wird entweder versucht, die Sendung noch ein weiteres Mal zuzustellen, oder die Sendung wird in einer Filiale des Zustellunternehmens zur Abholung durch den Besteller hinterlegt. Seit einiger Zeit besteht zwar die Möglichkeit, die Sendung an Sammelpunkte wie beispielsweise Paketautomaten, so DHL-Packstationen oder Amazon Lockers, liefern zu lassen, jedoch befinden sich die Sammelpunkte in der Regel nicht in unmittelbare Nähe des Haushalts des Bestellers bzw. Empfängers der Sendung, und damit nicht im unmittelbaren Verfügungsbereich des Empfängers.

In jüngster Zeit sind daher Versuche unternommen worden, Sendungen mittels einer unbemannten Transporteinrichtung, so beispielsweise einem unbemannten Fluggerät, auch Paketkopter, flugfähiges Transportgerät oder Drohne genannt, zu überbringen. Bei diesen Versuchen ist oftmals ein im Verfügungsbereich des Empfängers angeordneter Aufnahmebehälter zur Aufnahme der Sendung vorgesehen, an dem das unbemannte Fluggerät die Sendung überbringen kann bzw. von dem das unbemannte Flugobjekt die Sendung abholen kann. Nachdem die Sendung durch das unbemannte Flugobjekt an den Aufnahmebehälter überbracht worden ist, welcher beispielsweise im Vorgarten eines Hauses des Empfängers aufgestellt ist, kann der Empfänger dem Aufnahmebehälter entnehmen die Sendung entnehmen.

Bei vorgenannten Versuchen hat sich jedoch die eigentliche Übergabe der Sendung von dem unbemannten Fluggerät an den Aufnahmebehälter als äußerst schwierig erwiesen. So liegt eine erste Herausforderung darin, dass das unbemannte Fluggerät zielgenau auf dem Aufnahmebehälter zu landen hat, damit dann in der Folge die Sendung übergeben werden kann. Ein "Abwerfen" der Sendung von dem unbemannten Fluggerät auf den Aufnahmebehälter hat sich als unpraktikabel erwiesen, da dadurch nicht selten zerbrechliche in der Sendung enthaltene Güter beschädigt werden. In anderen Fällen kann aus geographischen oder baulichen Gegebenheiten das unbemannte Fluggerät nicht auf dem Aufnahmebehälter landen, so dass die Sendung beispielsweise über eine Distanz von 2 m zwischen dem neben dem Aufnahmebehälter gelandeten unbemannten Fluggerät und dem Aufnahmebehälter übergeben werden muss. Neben unbemannten Fluggeräten existieren weitere unbemannte Transporteinrichtungen, wie selbststeuernde Fahrzeuge oder Schiffe, bei denen sich analoge Probleme auftun. In Summe stellt also die Übergabe der Sendung über den sogenannten "letzten Meter" ("last meter") zwischen unbemannter Transporteinrichtung und Aufnahmebehälter ein nicht zu vernachlässigendes Problem dar.

WO 2007/065649 A2 beschreibt einen Flugtransporter mit starren Zellenstrukturen, die mit leichten Materialien als Hülle bespannt sind, zusammengesetzt aus Modulen. Der Flugtransporter ist sowohl eine Art Luftschiff ohne Leitwerk als auch eine angenäherte Ballonkonstruktion mit einer starren Struktur und eigenem Antrieb, der in der Lage ist, unter Einhaltung der Luftverkehrsvorschriften einen Lastentransport im Bereich von etwa 20 t oder mehr auf kurze bis mittlere Entfernung unter Anwendung der Leichter-als-Luft (LAL)-Technologie zu realisieren.

US 2014/032034 A1 beschreibt eine Liefersystem mit einem unbemannten Fluggerät sowie ein Logistiknetzwerk zur Kontrolle und Überwachung.

Ausgehend von dieser Situation ist es eine Aufgabe der vorliegenden Erfindung, eine Möglichkeit anzugeben, wie eine Sendung in sicherer Weise von einer unbemannten Transporteinrichtung an einen Aufnahmebehälter übergeben werden kann, so insbesondere derart, dass der Inhalt der Sendung bei Übergabe über den "letzten Meter" unversehrt bleibt.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe gelöst durch eine Anordnung mit einer unbemannten Transporteinrichtung zum Überbringen einer Sendung und einer Übergabeeinrichtung, wobei der Aufnahmebehälter (3) als Briefkasten, Paketkasten, Paketbriefkasten und/oder Packstation zum Aufnehmen der Sendung (2) ausgestaltet ist, die Übergabeeinrichtung (4) an dem Aufnahmebehälter (3) angeordnet ist und die Übergabeeinrichtung ausgestaltet ist die Sendung zwischen der Transporteinrichtung und dem Aufnahmebehälter zu übergeben, jeweils geführt durch die Übergabeeinrichtung. Nach einer bevorzugten Weiterbildung ist die Übergabeeinrichtung ausgestaltet, die Sendung von der unbemannten Transporteinrichtung an den Aufnahmebehälter abzusenken, von dem Aufnahmebehälter zu der Transporteinrichtung anzuheben und/oder.

Ein wesentlicher Punkt der Erfindung ist somit, dass die Sendung gerade nicht von der unbemannten Transporteinrichtung "fallengelassen" wird, sondern stattdessen durch die Übergabeeinrichtung während der Übergabe geführt wird. Das bedeutet, dass während des Absenkens, des Anhebens und/oder des Übergebens der Sendung die Sendung jeweils, aufgrund der Ausgestaltung der Übergabeeinrichtung, durch die Übergabeeinrichtung in ihrer Position relativ zur Transporteinrichtung und/oder dem Aufnahmebehälter und vorzugsweise dediziert geführt wird. Im Gegensatz dazu, wenn also beispielsweise ein unbemanntes Fluggerät als unbemannte Transporteinrichtung den Aufnahmebehälter anfliegt und in einem Abstand von einem Meter oberhalb des Aufnahmebehälters verbleibt, wird durch ein Fallenlassen der Sendung von dem Fluggerät hin zum Aufnahmebehälter gerade keine dedizierte Führung der Sendung durch die Übergabeeinrichtung erreicht.

Mittels der vorgeschlagenen Anordnung lassen sich also zerbrechliche Güter als Sendungen zwischen einer unbemannten Transporteinrichtung und einem Aufnahmebehälter in sicherer Weise übergeben, so insbesondere durch Absenken oder Anheben der Sendung, ohne dass dabei Beschädigungen an der Sendung zu befürchten sind. Somit wird es insbesondere möglich, leicht zerbrechliche Güter des täglichen Bedarfs, wie Eier oder Joghurts, mittels der unbemannten Transporteinrichtung unabhängig von Ladenöffnungszeiten an einen Besteller bzw. Empfänger in unversehrter Weise zu überbringen.

Die Sendung kann grundsätzlich beliebig ausgestaltet sein, so beispielsweise als Postsendung, als Paket, als Einschreiben, als Brief oder sonstiges transportables Gut, und kann beispielsweise in einem Behälter, einer Kiste und/oder einer Box angeordnet sein. Der Aufnahmebehälter ist bevorzugt im Verfügungsbereich eines Empfängers bzw. Bestellers der Sendung angeordnet, so exemplarisch in einem Vorgarten eines Hauses und/oder auf einem Dach des Hauses, so dass, im Falle eines unbemannten Fluggerätes als Transporteinrichtung, der Aufnahmebehälter in besonders einfacher Weise durch die Transporteinrichtung angeflogen werden kann. Weiter bevorzugt erfolgt das Absenken, das Anheben und/oder das Übergeben der Sendung zwischen Transporteinrichtung und Aufnahmebehälter dann, wenn der Abstand zwischen Transporteinrichtung und Aufnahmebehälter weniger als 5 m, 3 m, 2 m, 1 m, 0,5 m oder 0,25 m beträgt, oder wenn die Transporteinrichtung berührend an dem Aufnahmebehälter anliegt, so beispielsweise im Falle eines unbemannten Fluggerätes das Fluggerät auf dem Aufnahmebehälter gelandet ist. Weiter bevorzugt erfolgt das Absenken, Anheben und/oder Übergeben mit einer konstanten Geschwindigkeit von beispielsweise 1 m/s, 0,5 m/s, 0,2 m/s oder 0,1 m/s.

Grundsätzlich existieren verschiedene Möglichkeiten für die Ausgestaltung der Übergabeeinrichtung. Nach einer bevorzugten Weiterbildung ist jedoch vorgesehen, dass die Übergabeeinrichtung als höhen- und/oder horizontal veränderbare Hebebühne, so insbesondere als Scherenhubtisch, als höhen- und/oder horizontal veränderbarer Lift, als höhen- und/oder horizontal veränderbarer Plattform, als höhen- und/oder horizontal veränderbarer Greifarm, als Seilwinde und/oder automobil ausgestaltet ist. Bevorzugt sind vorgenannte Mittel über eine Distanz von wenigstens 0,2 m, 0,5 m, 1 m, 2 m oder 5 m höhen- und/oder horizontal veränderbar. Die Mittel können einerseits fest mit der Transporteinrichtung und/oder mit dem Aufnahmebehälter verbunden sein. Ebenso ist es möglich, dass sowohl die Transporteinrichtung als auch der Aufnahmebehälter jeweils, exemplarisch, einen Greifarm aufweist. Der Greifarm ist weiter bevorzugt zur Vereinzelung von einer Mehrzahl von Sendungen ausgestaltet und als eine in x-und y-bewegliche Konstruktion unterhalb der flugfähig ausgestalteten Transporteinrichtung angeordnet. Weiter bevorzugt ist der Greifarm durch eine mechanische, hydraulische und/oder pneumatische Einrichtung in vorgenannte Richtungen beweglich ausgestaltet.

Sofern nun im Falle eines flugfähigen Transportgerätes als unbemannte Transporteinrichtung das Transportgerät auf einem als Kasten ausgestalteten Aufnahmebehälter gelandet ist, so mit Kufen des Transportgerätes den Kasten berührt, kann in einer beispielhaften Ausgestaltung die Hebebühne hin zu der Sendung in die Höhe fahren, bis dass eine Oberfläche der Hebebühne berührend an der unterhalb des Transportgerätes fixierten Sendung zu liegen kommt. Sofern dann die Sendung von dem Fluggerät gelöst wird, entfällt, gegenüber aus dem Stand der Technik bekannten Ausgestaltungen, ein Herabfallen der Sendung von dem Transportgerät auf den Aufnahmebehälter. Die Hebebühne kann daraufhin weg von dem Transportgerät hin zum Aufnahmebehälter abgesenkt werden, damit in der Folge die Sendung beispielsweise in einem Innenraum des Aufnahmebehälters zur Abholung durch den Besteller gelagert werden kann.

Sofern jedoch die unbemannte Transporteinrichtung als ein selbstfahrendes Fahrzeug ausgestaltet ist, welches sich zum Übergeben der Sendung bis auf eine geringe Distanz von beispielsweise weniger als einem Meter hin zum Aufnahmebehälter bewegt hat, führt die Übergabeeinrichtung zum Übergeben der Sendung eine Bewegung in horizontaler Richtung aus. Einerseits kann dazu die Übergabeeinrichtung exemplarisch als horizontal veränderbare Plattform ausgestaltet sein, welche sich zum Übergeben der Sendung, exemplarisch ausgestaltet als horizontal veränderbare Plattform, in horizontaler Richtung hin zum Aufnahmebehälter bewegt. Im Falle einer automobilen Ausgestaltung der Übergabeeinrichtung ist bevorzugt, dass sich die Übergabeeinrichtung selbststeuernd, selbstbewegend und/oder autonom in einem Bereich zwischen Transporteinrichtung und Aufnahmebehälter zum Übergeben der Sendung bewegen kann. In diesem Fall kann die Übergabeeinrichtung über einen Antrieb und Räder oder ähnliche Mittel verfügen.

Nicht zur Erfindung gehörig ist ein Seilgewinde, das bevorzugt an dem flugfähigen Transportgerät derart angeordnet ist, dass entweder bei einer Landung des Fluggerätes auf dem Aufnahmebehälter oder sogar während des Fluges die Sendung mittels des Seilgewindes hin zum Aufnahmebehälter abgeseilt und/oder vom Aufnahmebehälter hin zum Transportgerät heraufgezogen werden kann. Vorgenannte Ausgestaltungen der Übergabeeinrichtung stellen in jedem Fall technische Mittel dar, mittels derer eine geführte Übergabe der Sendung zwischen Transporteinrichtung und Aufnahmebehälter bewerkstelligt werden kann, wobei während der Übergabe die Sendung bevorzugt berührend an dem jeweiligen Mittel anliegt. Weiter bevorzugt weisen die Hebebühne, der Lift, die Plattform, der Greifarm und/oder das Seilgewinde jeweils eine Greifeinrichtung auf, mittels derer die Sendung an der Übergabeeinrichtung fixierbar ist, somit also die Sendung während der Übergabe nicht ungewollt herunterfallen oder der Übergabeeinrichtung entgleiten kann. Nach einer nicht zur Erfindung gehörenden Ausgestaltung ist die Übergabeeinrichtung an der Transporteinrichtung angeordnet und die Übergabeeinrichtung ist als Saugeinrichtung zum Ansaugen sowie zum Absenken und/oder Anheben der Sendung ausgestaltet. Vorzugsweise ist die Saugeinrichtung als Staubsauger oder vergleichbares Mittel derart ausgestaltet, das die Sendung einerseits aufgrund eines durch die Saugeinrichtung erzeugten Unterdrucks durch die Saugeinrichtung angesaugt und dadurch in geführter Weise abgesenkt bzw. angehoben werden kann, so beispielsweise von einem flugfähigen Transportgerät, welches auf dem Aufnahmebehälter gelandet ist. Durch eine derartige mittels der Saugeinrichtung verwirklichten "Rüsselfunktion" lässt sich in besonders sicherer und kontrollierter Weise die Sendung zwischen Transporteinrichtung und Aufnahmebehälter übergeben.

Nach einer noch weiter bevorzugten Ausgestaltung weist die Übergabeeinrichtung eine Führungseinrichtung ausgestaltet zum Führen der Sendung während des Absenkens, Anhebens und/oder Übergebens der Sendung auf. Die Führungseinrichtung kann durch eine Schiene ausgestaltet sein, durch welche die Sendung während der Übergabe geführt ist und nicht ungewollt fallen kann. Ebenso kann die Führungseinrichtung als eine Klammer oder eine Fixiereinrichtung zum Fixieren der Sendung während des Absenkens, Anhebens bzw. Übergebens der Sendung ausgestaltet sein. Durch die Führungseinrichtung wird erreicht, dass die Sendung während der Übergabe jeweils in einer definierten bzw. dedizierten Position verbleibt und nicht aufgrund eines ungewollten Fallens oder Verrutschens beschädigt werden kann.

Gemäß einer anderen bevorzugten Weiterbildung weist die Anordnung den Aufnahmebehälter auf, wobei der Aufnahmebehälter einen Behälterinnenraum und eine verschließbare Öffnung aufweist, durch welche die Sendung mittels der Übergabeeinrichtung zwischen der Transporteinrichtung und dem Aufnahmebehälter hindurch übergebbar ist, wobei die Übergabeeinrichtung in dem Behälterinnenraum derart angeordnet und ausgestaltet ist, das die Übergabeeinrichtung bei verschlossener Öffnung innerhalb des Behälterinnenraums angeordnet ist und sich zum Übergeben der Sendung durch die geöffnete Öffnung hindurch erstrecken kann. Durch diese Ausgestaltung ist die Übergabeeinrichtung geschützt vor Witterungseinflüssen innerhalb des Behälterinnenraums angeordnet. Weiter bevorzugt weist der Aufnahmebehälter einen Näherungssensor und/oder eine Kommunikationseinrichtung auf, welche in Kommunikationsverbindung mit der Transporteinrichtung steht. Sofern nun durch den Aufnahmebehälter festgestellt wird, das sich die Transporteinrichtung dem Aufnahmebehälter zum Übergeben der Sendung nähert, so beispielsweise durch Empfang einer drahtlos und/oder drahtgebundenen Mitteilung, öffnet sich bevorzugt die Öffnung, damit die Übergabe der Sendung mittels der Übergabeeinrichtung durch die Öffnung hindurch erfolgen kann. Der Begriff Übergeben der Sendung ist insofern gleichbedeutend mit Anheben oder Absenken zu verstehen. Grundsätzlich kann die Sendung durch die Transporteinrichtung ungeschützt gegen Witterungseinflüsse transportiert werden, so beispielsweise mittels einer Greifeinrichtung an einer flugfähigen Transporteinrichtung befestigt sein. Nach einer besonders bevorzugten Ausgestaltung weist die Transporteinrichtung eine Aufnahmeeinrichtung auf, so insbesondere eine Box und/oder eine Kiste, zum Aufnehmen der Sendung, wobei die Übergabeeinrichtung zum Übergeben der Sendung in die und/oder aus der Aufnahmeeinrichtung ausgestaltet ist. Bevorzugt ist die Aufnahmeeinrichtung aus einem witterungsresistenten, feuchtigkeitsresistenten und/oder stoßresistenten Material ausgestaltet, was den Vorteil bietet, das die in der Aufnahmeeinrichtung transportierte Sendung während des Transports mittels der Transporteinrichtung beispielsweise gegen Beschädigung durch Regen geschützt ist. Weiter bevorzugt ist die Aufnahmeeinrichtung aus einem Styropor oder sonstigem Hartschaum ausgestaltet, welches im Falle von einer flugfähigen Transporteinrichtung aufgrund des geringen Gewichtes vorteilig ist.

Weiter bevorzugt ist die Aufnahmeeinrichtung verschließbar ausgestaltet, so beispielsweise zweiteilig als Kiste mit einem die Kiste verschließbaren Deckel. Noch weiter bevorzugt ist die Übergabeeinrichtung ausgestaltet, die Sendung in einen Innenraum der Aufnahmeeinrichtung hinein zu übergeben, so beispielsweise durch Absenken oder Anheben, und/oder aus dem Innenraum der Aufnahmeeinrichtung heraus die Sendung zu entnehmen. Nach einer zusätzlichen Ausgestaltung weist die Aufnahmeeinrichtung wenigstens zwei Etagen und/oder Kammern zum Aufnehmen jeweils wenigstens einer Sendung auf und die Übergabeeinrichtung ist zum Übergeben der Sendung in alle Etagen und/oder Kammern ausgestaltet. Vorteil dieser Ausgestaltung ist, dass eine Mehrzahl von Sendungen in der Aufnahmeeinrichtung aufgenommen und gleichzeitig durch die Transporteinrichtung transportiert werden können. Durch die Übergabeeinrichtung kann eine jeweilige Sendung entnommen und an den Aufnahmebehälter übergeben werden. Derart ausgestaltet kann die Transporteinrichtung, als unbemanntes flugfähiges Transportgerät, eine Mehrzahl von Aufnahmebehältern nacheinander anfliegen, und an den Aufnahmebehältern jeweils Sendungen durch Übergabe mittels der Übergabeeinrichtung aufnehmen und/oder abgeben, die dann innerhalb der Aufnahmeeinrichtung in einer jeweiligen Etage bzw. Kammer aufgenommen bzw. entnommen werden.

Nach einer noch weiter bevorzugten Ausgestaltung ist die Aufnahmeeinrichtung an der Transporteinrichtung derart angeordnet und ausgestaltet, das die flugfähig ausgestaltete Transporteinrichtung mit der Aufhahmeeinrichtung, insbesondere berührend, auf dem Aufnahmebehälter landen kann. Auf diese Weise kommt die Aufnahmeeinrichtung in direkten Kontakt mit dem Aufnahmebehälter, was die Übergabe der Sendung mittels der Übergabeeinrichtung weiter vereinfacht, da die Sendung über eine wesentlich geringere Distanz zwischen Transporteinrichtung und Aufnahmebehälter zu übergeben ist, als wenn beispielsweise die flugfähig ausgestaltete Transporteinrichtung nicht auf dem Aufnahmebehälter landet und stattdessen in einem Abstand von 1 m oberhalb des Aufnahmebehälters fliegend verharrt, um die Sendung zu übergeben.

Nach einer besonders bevorzugten Ausgestaltung ist die unbemannte Transporteinrichtung als Fluggerät, insbesondere als Luftfahrzeug, als UAV als Abkürzung von Englisch unmanned, uninhabited oder unpiloted aerial vehicle, als Paketkopter, als Drohne, als Fahrzeug, so als selbststeuerndes Fahrzeug, und/oder als schwimmendes Objekt ausgestaltet. Mögliche Ausprägungsformen des unbemannten Fluggerätes bzw. UAV können Helikopter, Multikopter, so beispielsweise Quadrokopter oder Tiltwing sein, um nur einige Möglichkeiten aufzuzählen. Wenn im Rahmen der Erfindung von Fluggerät oder Drohne gesprochen wird, so sind ebenso alle möglichen Ausprägungsformen sowie UAV etc., wie vorab ausgeführt, gemeint.

Weiter bevorzugt weist die unbemannte Transporteinrichtung mechanische und/oder informationstechnologische Eigenschaften, nachfolgend "Intelligenz" genannt, auf, die die unbemannte Transporteinrichtung befähigen, selbständig den Aufnahmebehälter zu erreichen. Die Intelligenz kann als Mikroprozessor, als Steuerungseinrichtung und/oder als speicherprogrammierbare Steuerung ausgestaltet sein, vorzugsweise um ein autonomes Verhalten der Transporteinrichtung zu ermöglichen. Zudem kann die Transporteinrichtung über Sensoren verfügen, die die optische, akustische, olfaktorische und/oder datensignalbasierte Identifikationen zur Interpretation von Umweltsignalen ermöglichen und/oder über mechanische Komponenten, die die autonome und/oder automatische Bewegung im Raum hin zum bzw. weg vom zum Aufnahmebehälter sowie die für die Übergabe und/oder Übernahme der Sendung notwendigen Komponenten enthalten. Schließlich kann die Transporteinrichtung über eine Kommunikationseinrichtung verfügen, um mit einer zentralen Servereinrichtung und/oder dem Aufnahmebehälter in Kommunikationsverbindung zu treten.

Der Aufnahmebehälter kann grundsätzlich beliebig ausgestaltet sein und weist bevorzugt ein Gehäuse auf, wobei an dem Gehäuse ein oder mehrere Türen vorgesehen sind, durch die ein Empfänger oder Besteller der Sendung Zugriff auf die Sendung erlangen kann und/oder eine Sendung in dem Aufnahmebehälter zur Abholung durch die Transporteinrichtung hinterlegen kann. Der Aufnahmebehälter ist als Briefkasten, Paketkasten, Paketbriefkasten und/oder Packstation zum Aufnehmen der Sendung ausgestaltet.

Nach einer nicht zur Erfindung gehörenden Ausgestaltung ist die Übergabeeinrichtung an der Transporteinrichtung angeordnet, wobei die Übergabeeinrichtung eine elektronische Quittiereinrichtung zur Quittierung einer Übergabe der Sendung durch eine Person aufweist und die Quittiereinrichtung derart an der Übergabeeinrichtung angeordnet ist, dass die Quittiereinrichtung von der Transporteinrichtung weg absenkbar und/oder hin zur Transporteinrichtung anhebbar ist. Die Quittiereinrichtung ist bevorzugt als touchpad ausgestaltet, so dass die Peron, bevorzugt der Besteller bzw. Empfänger der Sendung, in einfacher Weise durch Unterschrift ein Empfang der Sendung bestätigen bzw. quittieren kann.

Die Aufgabe der Erfindung kann weiterhin durch ein Verfahren zum Übergeben einer Sendung zwischen einer unbemannten Transporteinrichtung und einem Aufnahmebehälter gelöst werden, mit den Schritten:
Absenken der Sendung von der unbemannten Transporteinrichtung auf den Aufnahmebehälter geführt durch die Übergabeeinrichtung,
Übergeben der Sendung zwischen der unbemannten Transporteinrichtung und dem Aufnahmebehälter geführt durch die Übergabeeinrichtung, und/oder
Anheben der Sendung von dem Aufnahmebehälter zu der Transporteinrichtung geführt durch die Übergabeeinrichtung.

Durch das vorgeschlagene Verfahren lässt sich die Übergabe der Sendung zwischen der unbemannten Transporteinrichtung und dem Aufnahmebehälter besonders einfach dadurch gestalten, das während der gesamten Übergabe die Sendung durch die Übergabeeinrichtung geführt und insofern nicht unbeabsichtigt fallen und dadurch zu Schaden kommen kann. Vorteilhafte Ausgestaltungen des Verfahrens ergeben sich für den Fachmann in Analogie zu der zuvor beschriebenen Anordnung.

Nachfolgend wird die Erfindung unter Bezugnahme auf die anliegende Zeichnung anhand einer bevorzugten Ausführungsform näher erläutert.

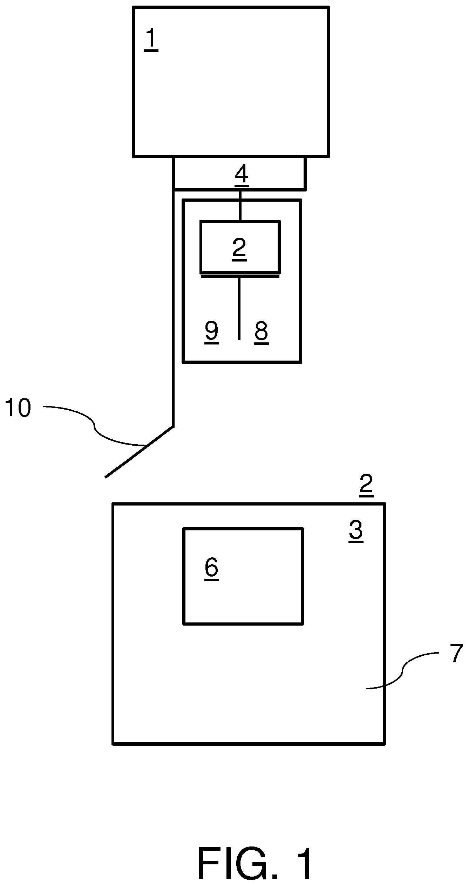

In der Zeichnung zeigen
- Fig. 1: eine schematische Ansicht der Anordnung gemäß einem bevorzugten Ausführungsbeispiel der Erfindung

Fig. 1 zeigt eine Anordnung gemäß einem Ausführungsbeispiel der Erfindung in einer schematischen Ansicht mit einer unbemannten Transporteinrichtung 1, welche vorliegend als flugfähiges Transportgerät, so als Drohne bzw. Paketkopter, ausgestaltet ist. Die Transporteinrichtung 1 ist eingerichtet zum Überbringen einer Sendung 2, so vorliegend eine Paketsendung, an einen Aufnahmebehälter 3, welcher vorliegend als Paketkasten ausgestaltet ist.

Zum Übergeben der Sendung 2 ist eine Übergabeeinrichtung 4 vorgesehen, die gemäß dem vorliegenden Ausführungsbeispiel an der Transporteinrichtung 1 angeordnet ist. Die Übergabeeinrichtung 4 ist ausgestaltet, die Sendung 2 durch Absenken von der Transporteinrichtung 1 hin zum Aufnahmebehälter 3 an den Aufnahmebehälter 3 zu übergeben, wobei die Sendung 2 während der Übergabe durch die Übergabeeinrichtung 4 geführt ist. Zur Führung ist eine als Schiene ausgestaltete Führungseinrichtung 5 vorgesehen, welche während des Absenkens der Sendung 2 von der Transporteinrichtung 1 hin zum Aufnahmebehälter 3 die Sendung 2 berührend entlang der Führungseinrichtung 5 führt.

Die Übergabeeinrichtung 4 ist vorliegend als Greifarm ausgestaltet, welcher an einer aus x- und y-Achsen bestehenden Konstruktion unterhalb des flugfähigen Transportgerätes 1 angeordnet ist und derart in x- und y-Richtung bewegbar ist. Der Greifarm 4 ist mittels eines mechanisch-hydraulischen Antriebes über ein Seilgewinde in z-Richtung bewegbar, also einerseits hin zum Aufnahmebehälter 3 sowie in Richtung der Transporteinrichtung 1. Derart ausgestaltet ist die Sendung 2 von der Transporteinrichtung 1 hin zum Aufnahmebehälter 3 absenkbar, so durch eine verschließbare Öffnung 6 des Aufnahmebehälters 3 hindurch in einem Behälterinnenraum 7 des Aufnahmebehälters 3 ablegbar. Ferner umfasst die Transporteinrichtung 4 eine Aufnahmeeinrichtung 8, welche vorliegend als Box zum Aufnehmen der Sendung 2 ausgestaltet ist, so dass die Sendung 2 während des Transports mittels der Transporteinrichtung 1 gegen Witterungseinflüsse geschützt ist. In der Aufnahmeeinrichtung 8 sind mehrere Etagen 9 bzw. Kammern 9 vorgesehen, so dass eine Mehrzahl von Sendungen 2 unterschiedlicher Größen in der Aufnahmeeinrichtung 8 beförderbar sind. Die Dimensionierung der Aufnahmeeinrichtung 8 ist derart gewählt, dass das flugfähige Transportgerät 1 mit der Aufnahmeeinrichtung 8 voran auf dem Aufnahmebehälter 3 landen kann, wobei die Aufnahmeeinrichtung 8 längs kürzer als die x- und y-Achsenkonstruktion und der an der Aufnahmeeinrichtung 8 befestigte Greifarm 4 ist.

Schließlich weist die Übergabeeinrichtung 4 noch eine Quittiereinrichtung 10 auf, welche als touchpad ausgestaltet ist, so dass ein Empfänger bzw. Besteller der Sendung 2 mittels Unterschrift einen Empfang der Sendung 2 auf dem touchpad quittieren kann. Die Quittiereinrichtung 10 ist von der Transporteinrichtung 4 weg absenkbar bzw. hin zur Transporteinrichtung 4 anhebbar.

**Bezugszeichenliste**

| | |
|---|---|
| Transporteinrichtung | 1 |
| Sendung | 2 |
| Aufnahmebehälter | 3 |
| Übergabeeinrichtung | 4 |
| Führungseinrichtung | 5 |
| Öffnung | 6 |
| Behälterinnenraum | 7 |
| Aufnahmeeinrichtung | 8 |
| Etage, Kammer | 9 |
| Quittiereinrichtung | 10 |

## Patentansprüche

1. Anordnung mit einer autonomen unbemannten Transporteinrichtung (1) zum Überbringen einer Sendung (2), einem Aufnahmebehälter (3) und einer Übergabeeinrichtung (4), wobei
der Aufnahmebehälter (3) als Briefkasten, Paketkasten, Paketbriefkasten und/oder Packstation zum Aufnehmen der Sendung (2) ausgestaltet ist, **dadurch gekennzeichnet, dass** die Übergabeeinrichtung (4) an dem Aufnahmebehälter (3) angeordnet ist und die Übergabeeinrichtung (4) ausgestaltet ist, die Sendung (2) zwischen der Transporteinrichtung (1) und dem Aufnahmebehälter (3) und geführt durch die Übergabeeinrichtung (4) zu übergeben.

2. Anordnung nach dem vorhergehenden Anspruch, wobei die Übergabeeinrichtung (4) ausgestaltet ist, die Sendung (2) von der unbemannten Transporteinrichtung (1) an den Aufnahmebehälter (3) abzusenken und/oder von dem Aufnahmebehälter (3) zu der Transporteinrichtung (1) anzuheben, jeweils geführt durch die Übergabeeinrichtung (4).

3. Anordnung nach einem der vorhergehenden Ansprüche, wobei die Übergabeeinrichtung (4) als höhen- und/oder horizontal veränderbare Hebebühne (4), als höhen- und/oder horizontal veränderbarer Lift (4), als höhen- und/oder horizontal veränderbare Plattform (4), als höhen- und/oder horizontal veränderbarer Greifarm (4) und/oder automobil ausgestaltet ist.

4. Anordnung nach einem der vorhergehenden Ansprüche, wobei die Übergabeeinrichtung (4) eine Führungseinrichtung (5) ausgestaltet zum Führen der Sendung (2) während des Absenkens, Anhebens und/oder Übergebens der Sendung (2) aufweist.

5. Anordnung nach einem der vorhergehenden Ansprüche, mit dem Aufnahmebehälter (3), wobei der Aufnahmebehälter (3) einen Behälterinnenraum (7) und eine verschließbare Öffnung (6) aufweist, durch die die Sendung (2) mittels der Übergabeeinrichtung (4) zwischen der Transporteinrichtung (1) und dem Aufnahmebehälter (3) hindurch übergebbar ist, wobei die Übergabeeinrichtung (4) in dem Behälterinnenraum (7) derart angeordnet und ausgestaltet ist, dass die Übergabeeinrichtung (4) bei verschlossener Öffnung (6) innerhalb des Behälterinnenraums (7) angeordnet ist und sich zum Übergeben der Sendung (2) durch die geöffnete Öffnung (6) hindurch erstrecken kann.

6. Anordnung nach einem der vorhergehenden Ansprüche, wobei die Transporteinrichtung (4) eine Aufnahmeeinrichtung (8), insbesondere eine Box und/oder eine Kiste, zum Aufnehmen der Sendung (2) aufweist und die Übergabeeinrichtung (4) zum Übergeben der Sendung (2) in die und/oder aus der Aufnahmeeinrichtung (8) ausgestaltet ist.

7. Anordnung nach dem vorhergehenden Anspruch, wobei die Aufnahmeeinrichtung (8) wenigstens zwei Etagen (9) und/oder Kammern (9) zum Aufnehmen jeweils wenigstens einer Sendung (2) aufweist und die Übergabeeinrichtung (4) zum Übergeben der Sendung (2) in alle Etagen (9) und/oder Kammern (9) ausgestaltet ist.

8. Anordnung nach einem der vorhergehenden Ansprüche, wobei die unbemannte Transporteinrichtung (1) als Fluggerät, insbesondere als Luftfahrzeug, als UAV, als Drohne, als Paketkopter, als Helikopter, als Multikopter, als Quadropkopter, als Tiltwing, als Fahrzeug oder als schwimmendes Objekt ausgestaltet ist.

## Claims

1. Assembly comprising an unmanned transport device (1) for delivering a shipment (2), a receiving container (3) and a transfer device (4), wherein
the receiving container (3) is embodied as a letterbox, parcel box, letter and parcel box and/or Packstation for receiving the shipment (2),
**characterized in that**
the transfer device (4) is arranged on the transport device (1), and
the transfer device (4) is designed to transfer said shipment (2) being guided by the transfer device (4)between the transport device (1) and the receiving container (3).

2. Assembly according to the previous claim, wherein the transfer device (4) is designed to lower the shipment (2) from the unmanned transport device (1) to a receiving container (3) and/or to lift the shipment (2) from the receiving container (3) to the transport device (1), the shipment (2) being guided in each case by the transfer device (4).

3. The assembly according to any of the preceding claims, wherein the transfer device (4) is embodied as a vertically and/or horizontally adjustable lifting table (4), as a vertically and/or horizontally adjustable lift (4), as a vertically and/or horizontally adjustable platform (4), as a vertically and/or horizontally adjustable gripper arm (4) and/or in a self-mobile manner.

4. The assembly according to any one of the preceding claims, wherein the transfer device (4) has a guide device (5) designed to guide the shipment (2) during the lowering, lifting and/or transfer of the shipment (2).

5. The assembly according to any one of the preceding claims, comprising the receiving container (3), wherein the receiving container (3) has a container interior (7) and a closable opening (6), through which the shipment (2) can be transferred by means of the transfer device (4) between the transport device (1) and the receiving container (3), wherein the transfer device (4) is arranged and embodied in the container interior (7) in such a way that the transfer device (4), when the opening (6) is closed, is arranged within the container interior (7) and can extend through the opened opening (6) in order to transfer the shipment (2) .

6. The assembly according to any one of the preceding claims, wherein the transport device (4) has a receiving device (8), in particular a box and/or a case, for receiving the shipment (2) and the transfer device (4) is designed to transfer the shipment (2) into the and/or from the receiving device (8).

7. The assembly according to the preceding claim, wherein the receiving device (8) has at least two levels (9) and/or chambers (9) for each receiving at least one shipment (2), and the transfer device (4) is designed to transfer the shipment (2) in all levels (9) and/or chambers (9).

8. The assembly according to any one of the preceding claims, wherein the unmanned transport device (1) is embodied as a flying machine, in particular as an aircraft, as a UAV, as a drone, as a parcelcopter, as a helicopter, as a multicopter, as a quadcopter, as a tiltwing aircraft, as a vehicle, or as a floating object.

## Revendications

1. Système avec un dispositif de transport autonome sans pilote (1) pour la remise d'un envoi (2), un récipient de réception (3) et un dispositif de transmission (4), dans lequel
le récipient de réception (3) est formé par une boîte à lettres, une boîte à colis, une boîte à lettres et colis et une consigne automatique destinée à recevoir l'envoi (2),
**caractérisé en ce que** le dispositif de transmission (4) est disposé sur le récipient de réception (3) et le dispositif de transmission (4) est configuré pour transmettre l'envoi (2) entre le dispositif de transport (1) et le récipient de réception (3) et sous la conduite du dispositif de transmission (4).

2. Système selon la revendication précédente, dans lequel le dispositif de transmission (4) est configuré pour déposer l'envoi (2) au récipient de réception (3) par le dispositif de transport sans pilote (1) et/ou pour le lever du récipient de réception (3) au dispositif de transport (1), chaque fois sous la conduite du dispositif de transmission (4).

3. Système selon l'une quelconque des revendications précédentes, dans lequel le dispositif de transmission (4) est réalisé sous la forme d'un plateau de levage variable en hauteur et/ou horizontalement (4), d'un élévateur variable en hauteur et/ou horizontalement (4), d'une plate-forme variable en hauteur et/ou horizontalement (4), d'un bras de saisie variable en hauteur et/ou horizontalement (4) et/ou sous forme automobile.

4. Système selon l'une quelconque des revendications précédentes, dans lequel le dispositif de transmission (4) présente un dispositif de guidage (5) configuré pour guider l'envoi (2) pendant le dépôt, la levée et/ou le transfert de l'envoi (2).

5. Système selon l'une quelconque des revendications précédentes, avec le récipient de réception (3), dans lequel le récipient de réception (3) présente un espace intérieur de récipient (7) et une ouverture pouvant être fermée (6), à travers laquelle l'envoi (2) peut être transmis au moyen du dispositif de transmission (4) entre le dispositif de transport (1) et le récipient de réception (3), dans lequel le dispositif de transmission (4) est disposé et configuré dans l'espace intérieur de récipient (7) de telle manière que le dispositif de transmission (4) soit disposé à l'intérieur de l'espace intérieur de récipient (7) lorsque l'ouverture (6) est fermée et qu'il puisse s'étendre à travers l'ouverture (6) ouverte pour la transmission de l'envoi (2).

6. Système selon l'une quelconque des revendications précédentes, dans lequel le dispositif de transport (6) présente un dispositif de réception (8), en particulier une boîte et/ou une caisse, destinée à recevoir l'envoi (2) et le dispositif de transmission (4) est configuré pour transmettre l'envoi (2) dans le dispositif de réception (8) et/ou hors de celui-ci.

7. Système selon la revendication précédente, dans lequel le dispositif de réception (8) présente au moins deux étages (9) et/ou chambres (9) pour recevoir respectivement au moins un envoi (2) et le dispositif de transmission (4) est configuré pour transmettre l'envoi (2) dans tous les étages (9) et/ou dans toutes les chambres (9).

8. Système selon l'une quelconque des revendications précédentes, dans lequel le dispositif de transport sans pilote (1) est constitué par un appareil volant, en particulier un véhicule aérien, tel qu'un véhicule aérien sans pilote, un drone, un colicopter, un hélicoptère, un multicopter, un quadcopter, un aéronef à aile pivotante, par un véhicule ou par un objet flottant.
